# EUROPEAN PATENT SPECIFICATION

(11) **EP 0 874 733 B1**
(45) Date of publication and mention of the grant of the patent: **13.08.2008**
(21) Application number: 96944354.8
(22) Date of filing: 09.12.1996
(51) Int. Cl.: B32B 27/08

(54) **SYNTHETIC LAMINATE STRUCTURE AND METHOD FOR MAKING SAME**
SCHICHTSTOFFSTRUKTUR AUS KUNSTSTOFF UND HERSTELLUNGSVERFAHREN
STRUCTURE EN STRATIFIE SYNTHETIQUE ET SON PROCEDE DE FABRICATION

(30) Priority: 20.12.1995 US 575454; 31.10.1996 US 741961
(43) Date of publication of application: 04.11.1998
(73) Proprietor: EASTMAN CHEMICAL COMPANY, Kingsport, TN 37660 (US)
(72) Inventor: ECKART, Michael, Dennis, Blountville, TN 37617 (US); GOODSON, Raymond, Lynn, Sandy, UT 84094 (US)
(74) Representative: Wibbelmann, Jobst
(86) International application number: PCT/US1996/019862
(87) International publication number: WO 1997/022474

(56) References cited:
- EP-A- 0 587 353
- US-A- 3 977 136
- DATABASE WPI Section Ch, Week 8434 Derwent Publications Ltd., London, GB; Class A18, AN 84-211061 XP002030036 & JP 59 123 659 A (OSAKA SODA KK) , 17 July 1984
- DATABASE WPI Section Ch, Week 8838 Derwent Publications Ltd., London, GB; Class A18, AN 88-267616 XP002030037 & JP 63 194 949 A (DAINIPPON PRINTING CO LTD) , 12 August 1988
- Encyclopedia of Polymer Science and Engineering, vol. 12 (1988); John Wiley and Sons, New York (US); p. 15, 214
- Encyclopedia of Polymer Science and Engineering, vol. 16 (1989); John Wiley and Sons, New York (US); p. 807-813, 821-825
- Oppermann A.: 'Wörterbuch der modernen Technik - Dictionary of Modern Engineering', vol. 1; 3rd. ed. (1972); Verlag Dokumentation, München-Pullach (DE); p. 414, 415

## Description

### Field of the Invention

The present invention relates to a synthetic laminate structure having an aesthetically desirable surface appearance and to a method for making the synthetic laminate structure.

### Background of the Invention

Traditional synthetic laminates are composites made from any one of several types of thermosetting plastic and may contain a printed pattern. However, such laminates cannot be thermoformed and are generally rigid and brittle. In addition, certain materials which offer the prospect of providing improved properties in synthetic laminate structures do not readily adhere to adjacent layers resulting in nonuniform lamination or delamination after a period of use or upon being worked as in a milling, cutting or thermoforming operation, which adversely affects the functional or aesthetic characteristics of the resulting product. European patent application EP 0 587 353 Al describes a decorative laminate which is designed to be applied to fiber board to produce a decorative plywood appearance. One of the embodiments disclosed is said European patent application is a laminate which comprises a thermoplastic layer of PVC on which a pattern can be printed. Also present is an outer polyester layer. These two layers can be bonded together by a layer of polyurethane.

### Summary of the Invention

Accordingly, it is an object of this invention to provide a synthetic laminate structure having an aesthetically desirable surface appearance.

It is another object of this invention to provide a synthetic laminate structure of the character described which is lightweight and exhibits good durability.

It is a further object of this invention to provide a synthetic laminate structure of the character described which has the appearance of a natural building material.

It is also an object of this invention to provide a synthetic laminate structure having a colored or printed image wherein the laminated structure can be thermoformed and molded without substantially distorting the colored or printed image and without significant delamination.

An additional object of this invention is to provide a synthetic laminate structure and a method of making synthetic laminate structures wherein layers of material heretofore difficult to laminate are effectively and uniformly laminated together to minimize delamination providing a product with improved functional and aesthetic properties.

Another object of the invention is to provide a synthetic laminate structure which may be thermoformed without significant delamination to provide various shaped articles for lavatory, bath and countertop applications.

It is also an object of this invention to provide a synthetic laminate structure having a colored or printed image wherein the laminated structure can be thermoformed and molded without substantially distorting the colored or printed image and without significant delamination.

An additional object of this invention is to provide a synthetic laminate structure and a method of making synthetic laminate structures wherein layers of material heretofore difficult to laminate are effectively and uniformly laminated together to minimize delamination providing a product with improved functional and aesthetic properties.

Another object of the invention is to provide a synthetic laminate structure which may be thermoformed without significant delamination to provide various shaped articles for lavatory, bath and countertop applications.

With regard to the foregoing, the present invention provides an article shaped and formed by thermoforming a synthetic laminate structure which comprises:
(A) an outer layer having a thickness of 0.13 mm to 12.7 mm (0.005 to 0.5 inch) comprising a substantially transparent PETG copolyester having an inherent viscosity of from 0.5 to 1.2 dL/g as measured at 25°C using 0.50 grams of polymer per 100 ml of a solvent consisting of 60% by weight phenol and 40% by weight tetrachloroethane, wherein the copolyester comprises:
   (1) a dicarboxylic acid component comprising repeat units from at least 80 mole % of terephthalic acid or dimethylterephthalate; and
   (2) a diol component comprising repeat units from 98 to 1 mole % ethylene glycol and 2 to 99 mole % cyclohexanedimethanol, based on 100 mole % dicarboxylic acid and 100 mole % diol;
(B) a printed or colored polymeric film layer having opposed surfaces wherein at least one of the surfaces is colored or has an image printed thereon, and wherein the ink used in printing the image is a solvent-based ink;
(C) a backing layer comprising a PETG copolyester and having a thickness of 0.127 mm to 24.1 mm disposed adjacent the film layer;
(D) a laminating enhancer layer comprising a polyurethane disposed between the outer layer and the film layer providing a bond between the layers which exhibits a substantial absence of visible air pockets or adhesion discontinuities; and
(E) a second laminating enhancer layer disposed between the backing layer and the printed or colored film layer. In a preferred embodiment, the synthetic laminate structure further comprises a hardcoat selected from the group consisting of UV-cured or electron-beam-cured crosslinked acrylic, vacuum-cured or UV-cured urethane, UV-cured or electron-beam-cured silicon with acrylic, and heat cured urethane or plastisol disposed on the outer layer to provide scratch and dent resistance to the synthetic laminate structure.

The present invention is also directed to a method for making an article characterized above form a synthetic laminate structure which comprises:
I. disposing a laminating enhancer comprising a polyurethane in a random or uniform pattern between a first surface of an outer layer comprising a substantially transparent PETG copolyester having an inherent viscosity of from 0.5 to 1.2 dL/g as measured at 25°C using 0.50 grams of polymer per 100 ml of a solvent consisting of 60% by weight phenol and 40% by weight tetrachloroethane, wherein the copolyester comprises:
   (1) a dicarboxylic acid component comprising repeat units from at least 80 mole % of terephthalic acid or dimethylterephthalate; and
   (2) a diol component comprising repeat units from 98 to 1 mole % ethylene glycol and 2 to 99 mole % cyclohexanedimethanol, based on 100 mole % dicarboxylic acid and 100 mole % diol;
      and a first surface of a printed or colored polymeric film layer so that a substantially discontinuous layer of the laminating enhancer is sandwiched between the first surface of the outer layer and the first surface of the film layer;
II. disposing a backing layer comprising a PETG copolyester adjacent a second surface of the film layer so that the outer layer and film layer with the laminating enhancer sandwiched therebetween and the backing layer are in superposed relation;
   and wherein a second laminating enhancer layer is disposed between the backing layer and said second surface of the film layer;
III. applying sufficient heat and pressure to the superposed outer layer, film layer and backing layer to cause the laminating enhancer to flow and spread between the outer layer and film layer into a substantially continuous layer providing a bond between the outer layer and film layer which exhibits a substantial absence of visible air pockets or adhesion discontinuities; and
IV. forming an shaping said article by thermoforming.

The invention provides an article having a synthetic laminate structure which has an aesthetically desirable surface appearance and exhibits good durability for use as a building material. The laminate has a colored or printed image and is thermoformed and molded without substantially distorting the colored or printed image and without significant delamination. Light reflecting off the surface of the laminate gives a 3-dimensional appearance or depth effect with respect to the colored or printed film layer.

### Brief Description of the Drawing

The above and other features of the invention will be further described in the following detailed specification considered in conjunction with the accompanying drawing in which:

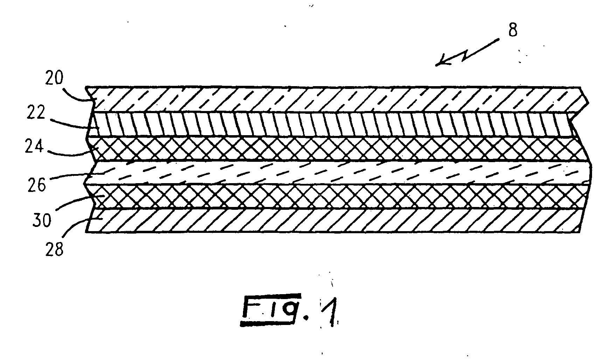

Fig. 1 is a partially separated cross-sectional view of a substantially planar synthetic laminate structure having a hard coat according to the present invention.

### Description of the Invention

This invention relates to an article shaped and formed by thermal forming a synthetic laminate structure and a method for making an article having said synthetic laminate structure as outlined in the claims. The laminate has an aesthetically desirable surface appearance, for example, that of a natural building material such as wood or stone. More particularly, the synthetic laminate structure contains an outer layer of transparent copolyester, a printed or colored film layer having opposed surfaces wherein at least one of the surfaces is colored or has an image printed thereon, and a backing layer. A polyurethane-based laminating enhancer is provided between the outer layer and film layer and between the film layer and backing layer. As used herein, "outer layer" and "backing layer" denote positions of the layers relative to the film layer and do not necessarily imply that the outer layer and backing layer are the outermost layers of the laminate structure. Thus, the laminate structure of the present invention may contain multiple layers on each side of the film layer as well as multiple film layers.

The outer layer comprises a transparent copolyester. The copolyester is a PETG copolyester. As defined herein "PETG copolyester" is a polyethylene terephthalate polyester modified with 2 mole % to 99 mole % of cyclohexanedimethanol repeat unit. The cyclohexanedimethanol may be either the 1,4- or 1,3- isomer and may be either in the *cis-* or *trans-* form or a mixture of the isomers. The copolyester may be semi-crystalline or amorphous, preferably amorphous. The outer layer is
from 0.13 mm to 12.7 mm thick (0.005 to 0.500 inch thick).

The copolyester contains repeat units from a dicarboxylic acid and a diol, based on 100 mole % dicarboxylic acid and 100 mole % diol. The dicarboxylic acid component contains at least 80 mole % of terephthalic acid or dimethylterephthalate. The copolyester may optionally be modified with up to 20 mole % of one or more different dicarboxylic acids other than terephthalic acid or dimethylterephthalate such that the total dicarboxylic acid content is equal to 100 mole %. Examples of other dicarboxylic acids which may be used with terephthalic acid include phthalic acid, isophthalic acid, 1,4-, 1,5-, 2,6-, and 2,7-naphthalenedicarboxylic acid, 1,3-, 1,4-cyclohexanedicarboxylic acid, cyclohexanediacetic acid, oxydibenzoic acid, 4,4-biphenyldicarboxylic acid, succinic acid, glutaric acid, adipic acid, azelaic acid, sebacic acid, suberic acid, pimelic acid, and 1,12-dodecanedioic acid. The copolyester may be prepared from one or more of the above dicarboxylic acids.

It should be understood that use of the corresponding acid anhydrides, esters, and acid chlorides of these acids is included in the term "dicarboxylic acid".

The diol component contains repeat units from 98 to 1 mole % ethylene glycol and 2 to 99 mole % 1,4-cyclohexanedimethanol and/or 1,3-cyclohexanedimethanol. The cyclohexanedimethanol may be present as the cis or trans isomer or mixtures thereof. In addition, the diol component can optionally be modified with up to 20 mole % of one or more different diols other than ethylene glycol and cyclohexanedimethanol such that the total diol content is equal to 100 mole %. The additional diols include cycloaliphatic diols having 6 to 16 carbon atoms and aliphatic diols having 3 to 16 carbon atoms. Examples of diols which may be used with ethylene glycol and cyclohexanedimethanol include diethylene glycol, triethylene glycol, propane-1,3-diol, butane-1,4-diol, pentane-1,5-diol, hexane-1,6-diol, 3-methylpentanediol-(2,4), 2-methylpentanediol-(1,4), 2,2,4-trimethylpentane-diol-(1,3), 2-ethylhexanediol-(1,3), 2,2-diethylpropane-diol-(1,3), hexanediol-(1,3), 1,4-di-(hydroxyethoxy)-benzene, 2,2-bis-(4-hydroxycyclohexyl)-propane, 2,4-dihydroxy-1,1,3,3-tetramethyl-cyclobutane, 2,2-bis-(3-hydroxyethoxyphenyl)-propane, and 2,2-bis-(4-hydroxypropoxyphenyl)-propane. The copolyester may be prepared from one or more of the above diols. The copolyesters may also be modified with polyethylene glycols or polytetramethylene glycols to enhance elastomeric behavior.

The copolyester has an inherent viscosity of 0.5 to 1.2 dL/g. Preferably, the copolyester has an inherent viscosity of 0.6 to 0.9 dL/g as measured at 25°C using 0.50 grams of polymer per 100 ml of a solvent consisting of 60% by weight phenol and 40% by weight tetrachloroethane. It is especially preferred that the copolyester be prepared from or derived from repeating units consisting of terephthalic acid units, ethylene glycol units and 1,4-cyclohexanedimethanol units.

The copolyester may be prepared by conventional polycondensation procedures well-known in the art. Such processes include direct condensation of the dicarboxylic acid(s) with the diols or by ester interchange using a dialkyl dicarboxylate. For example, a dialkyl terephthalate such as dimethyl terephthalate is ester interchanged with the diols at elevated temperatures in the presence of a catalyst.

The printed or colored film layer has opposed surfaces wherein an image is printed on one of the surfaces and/or the film layer contains coloration. More than one printed or colored film layer may be used in the laminate structure of the present invention. The use of multiple film layers can provide a 3-dimensional or "floating" appearance to the images or lettering in the printed or colored film layers. Each of the printed or colored film layers is joined to an outer layer on one of its surfaces by means of a laminating enhancer such that the image or coloration can be seen through the outer layer without significant distortion. The printed or colored film layer may comprise any suitable polymeric material which is compatible with the materials used for the outer layer and the backing layer, inks, and other materials used in fabricating the synthetic laminate structure. Preferably, the film layer comprises a polyvinyl chloride (PVC) or copolyester.

The film layer preferably ranges from 0.025 mm (0.001 inch) to 0.254 mm (0.010 inch) in thickness, and more preferably 0.025 mm (0.001 inch) to 0.178 mm (0.007 inch) and most preferably about 0.025 mm (0.001 inch) to 0.125 mm (0.0015 inch) in thickness. However, polymeric films thinner or thicker may be used in the film layer depending on the equipment available, and under such conditions the thickness is limited only by functionality.

In one embodiment, the image or coloration is printed on the bottom side of the film layer in which case the polymer used to prepare the film layer should be transparent. Any image may be used provided it has an aesthetically desirable surface appearance such as an image of a natural building material. As used herein the term "building material" means a material of suitable strength, durability, impact resistance, and rigidity that it can be used in construction of articles that could also be constructed of natural building materials such as wood or stone.

The image to be printed on the film layer can be prepared according to conventional photographic printing processes or with a digitized database generated from a photographic image. Digitizing and storing the image may be accomplished through any of a number of processes well known in the computer art as scanning.

Printing a selected image on the film layer may be accomplished by engraving one or more cylinders, and using such cylinders to print the selected engraved image on the film layer with appropriate ink, according to processes well known in the printing art. The resolution of the printing method should be in the range of about 30-59 dots per linear cm (75-150 dots per linear inch), i.e. about 872 cm² - 3,488 cm² (5,625-22,500 dots per square inch). An illustrative example of how this printing process can be used for bottom printing a wood grain image on the bottom surface of the film layer comprises using a first cylinder for first printing a pattern of black or other dark colored ink corresponding to the most prominent and most widely spaced grain lines, i.e. coarse grain. A second cylinder may then be used for printing smaller, more closely spaced grain lines, i.e. fine grain, using black or other dark colored ink.

A third cylinder may be used for printing colored bands on the film. For example, bands 3.8 cm (1.5 inch) wide and spaced apart by 3.8 cm (1.5 inch) are printed in a selected brown color. These bands give the effect of color variations within the wood, and the widths, spacing, and color of such bands are all selectable. A fourth cylinder may be used for printing a relatively solid background color of a selected shade of brown or other color corresponding to the color of the type of wood being simulated. Also, additional cylinders may be used to provide even more image effects in the printed or colored film layer. It is considered that a person of ordinary skill in the art could select more or fewer cylinders and printing steps to prepare a selected image.

These steps would be reversed for top printing an image on the top surface of the printed or colored film layer, i.e. the solid color would be printed first followed in succession by printing of the bands, fine grain, and coarse grain. Typically, there is some stretching of the film during printing. Therefore, the second cylinder should be slightly larger than the first cylinder, the third slightly larger than the second, and the fourth slightly larger than the third, so that the image printed with each cylinder is in proper register.

The ink used in the printing is preferably a solvent-based ink which is critical to producing a durable synthetic laminate structure that is resistant to delamination. During bonding together of the layers of the synthetic laminate structure, the layers of ink should bond with any adjacent layers as well as to the polymer used to prepare the printed or colored film layer and backing layer (for bottom printing) or outer layer (for top printing). A particularly preferred solvent-based ink comprises 20-70% of a solvent, 5-50% of a pigment, a vinyl acetate polymer and formulation aids, and-is available from American Mirrex.

The film layer may also be colored throughout its thickness by inclusion of pigments or colorants therein during its manufacture and this colored film may be used as is without printing thereon, or the colored film may be used as background for further printing of images thereon which may be seen through the outer layer.

The backing layer of polymer may be either transparent or opaque. Hence, the backing layer may be comprised of mixtures or recycled resins which do not necessarily retain transparency or even contain materials to further enhance or modify the properties of the finished synthetic laminate structure. However, the outer layer and the backing layer are preferably thermally compatible. As used herein, "thermal compatible" means that when layers of the synthetic laminate structure are bonded together under conditions of elevated temperature and pressure, the layers undergo approximately equal thermal expansion or contraction such that the surface of the synthetic laminate structure is substantially planar and to minimize interfacial stresses when the product is thermoformed.

The backing layer should exhibit good impact resistance, strength, and compatibility with the printed or colored film layer. The backing layer is
from 0.127 mm to 24.1 mm thick (0.005 to 0.950 inch thick). The thickness of the backing layer is limited only by functionality. The backing layer comprises a PETG copolyester. The PETG copolyester used to prepare the backing layer may be recycled PETG copolyester, and good optical qualities of the backing layer may not be important in many applications.

The laminating enhancer is selected to have rheological properties enabling the laminating enhancer to be applied in the form of strings or a spray or by means of a gravure printing roller, forming an initially highly viscous liquid, discontinuous layer which dries in the texture of a roughened surface having the feel of sandpaper. The laminating enhancer is spreadable under the application of heat and pressure into coalescence as a continuous film or layer forcing the air out laterally from between the adjacent layers. The laminating enhancer initially separates the outer layer from an adjacent layer in a discontinuous manner with a deliberate pattern of spaces between the layers until sufficient heat and pressure is applied to cause the material to flow and spread into a substantially uniform and continuous layer mechanically and gradually squeezing air from between the outer layer and the adjacent layer, thus minimizing or eliminating formation of air pockets or interface discontinuities. Upon cooling, the laminating enhancer forms an adhesive.

The laminating enhancer in many applications eliminates the need to apply a vacuum in order to remove trapped air between the adjacent layers of the synthetic laminate structure. However, it is noted that for large synthetic laminate structures, for example 3 X 3 meters, a vacuum may be necessary to assist in removing trapped air between the adjacent layers. Trapped air is undesirable because it distorts the appearance of the synthetic laminate structure and interferes with formation of a continuous cohesive bond between the layers. During lamination the laminating enhancer has been shown to form an interpenetrating network with adjacent layers.

Preferably, the laminating enhancer is a clear waterborne polyurethane which is liquid at 23°C and is commercially available from Hauthaway under the trademark HD 2001. Combinations of laminating enhancers may also be used in the same synthetic laminate structure. The laminating enhancer may be applied between any layers of the synthetic laminate structure.

It is a feature of the invention that the laminating enhancer is applied initially in a random or uniform pattern so that the laminating enhancer disposed between the layers is substantially discontinuous along the width or X direction and along the length or Y direction, preferably in both the X and Y directions, providing relatively small spaces of discontinuity in the laminating enhancer layer. Processes for applying the laminating enhancer in this manner include spraying the laminating enhancer in a liquid form such as sputtering or dripping the laminating enhancer in drops or strings from a crosswise disposed drip tube with a plurality of small spaced-apart openings. The laminating enhancer is preferably permitted to dry before the film layer is placed on the outer layer with the laminating enhancer sandwiched therebetween supporting the film away from the outer layer with small air-filled spaces supplied by the discontinuities in the laminating enhancer layer.

Because the outer layer is generally more substantial and rigid as compared to the film layer, it is preferred to apply the laminating enhancer to the outer layer and after the laminating enhancer cools apply the film layer thereto. However, it is within the scope of the invention to apply the laminating enhancer to the film layer.

The laminating enhancer preferably is applied to the backing layer in the same manner as described above for application to the outer layer provided, however, that in some instances it may be sufficient to apply the laminating enhancer to the backing layer for initial disposition between the backing layer and the film layer as a continuous layer such as where non-uniform adhesion between these layers does not detract from the visual or functional characteristics of the synthetic laminate structure. In some situations the laminating enhancer may be omitted entirely from between the film layer and the backing layer where, depending on the nature of the materials comprising the film layer and the backing layer, a sufficient bond may be achieved with heat and pressure alone.

The synthetic laminate structure preferably further comprises a transparent hard, scratch-resistant or abrasion resistant coating or layer laminated to the top surface of the outer layer. These coatings or layers also increase the chemical resistance of the laminate structure and provide an anti-graffiti surface. For example, PETG copolyester is not as hard or scratch resistant as may be desirable for certain applications. Thus, for an application where the exterior surface might be subjected to being scratched, it may be advantageous to provide a hard coat over the exterior surface. The hard coat may be a bilayer film comprising a hardcoat on top of a film layer. The hard coat is preferably selected from UV-cured or electron- beam-cured crosslinked acrylic, vacuum-cured or UV-cured urethane, UV-cured or electron-beam-cured silicon with acrylic or heat cured urethane or plastisol. A layer of polyurethane may be applied over the exterior surface to provide abrasion resistance. Alternatively, a biaxially oriented polyethylene terephthalate such as MYLAR available from DuPont Chemical Company or teflon such as TEDLAR available from DuPont Chemical Company may be laminated to the top surface of the outer layer as a hard coat.

A method for preparing the synthetic laminate structure of the present invention preferably involves at least two steps. The first step involves applying the laminating enhancer as described above in a random or uniform pattern between a first surface of the outer layer and a first surface of the printed or colored film layer so that a substantially-discontinuous layer of the laminating enhancer is sandwiched at least between the first surface of the outer layer and the first surface of the film layer.

The second step involves applying heat and pressure to the outer layer, film layer and backing layer to cause the laminating enhancer layer to flow and spread between the outer layer and film layer into a substantially continuous layer providing an effective bond between the outer layer and film layer characterized by a substantial absence of visible air pockets or adhesion discontinuities.

A second laminating enhancer layer is disposed between a first surface of the backing layer and a second surface of the printed or colored film layer prior to heating and pressing so that a layer of the laminating enhancer is sandwiched between the backing layer and the film layer.

Lamination is conducted at a temperature and pressure sufficient to cause the layers of the synthetic laminate structure to become tacky and bond to each other without causing decomposition, distortion, or other undesirable effects.

In the laminating method, a metal plate which is preferably a steel or aluminum plate, a pressure pad to help equalize pressure which is preferably a compressible fabric pad, and a further metal plate which is preferably a flexible aluminum plate having a thickness of 0.51 mm to 3.55 mm (20 mils to 140 mils) are respectively aligned in parallel pressing relation upon the exterior surface of the outer layer or hard coat if present. The fabric pad is preferably prepared from copper, silicone, NOMEX which is an aramid fiber or fabric available from DuPont de Nemours, E. I. & Company, or a combination of copper and/or silicone and/or NOMEX.

More preferably, cast paper or embossing paper is disposed between the metal plate and exterior surface of the outer layer or hard coat to provide a texture to the laminate structure and/or to prevent the outer layer which is comprised of PETG copolyester or hardcoat from sticking to the metal plate. Examples of cast paper or embossing paper include patent which provides high gloss, patina which provides a satin finish, matte, stucco, ostrich, reptilian, glitter, topaz, grid, and allegro which provides a leather appearance. A particularly preferred cast paper is available as ULTRACAST from S.D. Warren. In some instances, a hard coat is not necessary because a heavily textured surface may not display scratch marks.

In one embodiment, sufficient heat and pressure may be provided to effect a bond between the layers of the laminate structure in the absence of a press, employing instead the weight of the superposed layers in conjunction with application of heat. To augment the reduction in pressure a vacuum may be applied in order to remove trapped air between the adjacent layers of the synthetic laminate structure.

The laminating method comprises hot press bonding and cold press bonding. Hot press bonding is conducted at a temperature of 121°C to 171°C (250°F to 340°F, preferably 132°C to 146°C (270°F to 295°F), a pressure of 482.65 kPa to 758.45 kPa (70 psi to 110 psi), preferably 620.55 kPa to 689.5 kPa (90 psi to 100 psi), and for a period of time of 1 to 15 minutes, preferably 2 to 13 minutes. A temperature exceeding 171°C (340°F) and a pressure exceeding 758.45 kPa (110 psi) is undesirable in hot press bonding since the layers may squeeze out of the aligned synthetic laminate structure. Hot press bonding is followed by cold press bonding wherein the synthetic laminate structure is held rigid at a temperature of 21°C to 171°C (70°F to 340°F), preferably 38°C to 54°C (100°F to 130°F) and a pressure of 89.6 kPa to 3447.5 kPa (13 psi to 500 psi), preferably 689.5 kPa to 2068.5 kPa (100 psi to 300 psi), more preferably 1723.75 kPa (250 psi) while the laminate structure cools.

Lamination may be conducted using individual relatively short sheets of overlaid material or using elongated sheets for later width wise separation. The material is preferably laminated in a stationary press, however, the material may be laminated using continuous casting equipment of the type used in the plastics industry for producing laminate web material such as a machine employing upper and lower continuous belts. At least one of the belts is generally heated and the laminate structure is fed into the space between the belts for movement with the belts while being heated and pressed.

Once the synthetic laminate structure is cooled it may be shaped and formed into a variety of useful articles by thermoforming. Illustrative articles include counter tops, table tops, cabinet doors, game boards, juvenile products, toys, panels for shower stalls, hot tubs, chalkboards, indoor and outdoor signs, seamless vanity tops including sink, soap dish, and back splash.

Referring to the drawings, Figure 1 illustrates a partially separated cross-section of a substantially planar synthetic laminate structure 8. The synthetic laminate structure 8 comprises six layers: a hardcoat layer 20, a transparent outer layer 22, a printed or colored film layer 26, a laminating enhancer layer 24 sandwiched between the outer layer 22 and film layer 26, a backing layer 28, and a laminating enhancer layer 30 sandwiched between the backing layer 28 and film layer 26. The hardcoat layer 20 and backing layer 28 provide the strength, chemical resistance, impact resistance, scratch resistance and other qualities necessary for the synthetic laminate structure to be used as a synthetic building material, while the film layer 26 is printed with an image or colored.

## Claims

1. An article shaped and formed by thermoforming a synthetic laminate structure which comprises:
(A) an outer layer having a thickness of 0.13 mm to 12.7 mm (0.005 to 0.5 inch) comprising a substantially transparent PETG copolyester having an inherent viscosity of from 0.5 to 1.2 dL/g as measured at 25°C using 0.50 grams of polymer per 100 ml of a solvent consisting of 60% by weight phenol and 40% by weight tetrachloroethane, wherein the copolyester comprises:
(1) a dicarboxylic acid component comprising repeat units from at least 80 mole % of terephthalic acid or dimethylterephthalate; and
(2) a diol component comprising repeat units from 98 to 1 mole % ethylene glycol and 2 to 99 mole % cyclohexanedimethanol, based on 100 mole % dicarboxylic acid and 100 mole % diol;
(B) a printed or colored polymeric film layer having opposed surfaces wherein at least one of the surfaces is colored or has an image printed thereon, and wherein the ink used in printing the image is a solvent-based ink;
(C) a backing layer comprising a PETG copolyester and having a thickness of 0.127 mm to 24.1 mm disposed adjacent the film layer;
(D) a laminating enhancer layer comprising a polyurethane disposed between the outer layer and the film layer providing a bond between the layers which exhibits a substantial absence of visible air pockets or adhesion discontinuities; and
(E) a second laminating enhancer layer disposed between the backing layer and the printed or colored film layer.

2. The article of Claim 1 wherein the copolyester in the outer layer (A) has an inherent viscosity of from 0.6 to 0.9 dL/g and the diol component of the copolyester comprises repeat units from 67 to 75 mole % of ethylene glycol and 33 to 25 mole % of 1,4-cyclohexanedimethanol.

3. The article of Claim 1 wherein the printed or colored film layer is prepared from a polymer selected from the group consisting of polyvinyl chloride and a copolyester.

4. The article of Claim 1 wherein the thickness of the printed or colored film layer is from 0.025 mm to 0.254 mm (0.001 to 0.01 inch) thick.

5. The article of Claim 1 further comprising a hard coat disposed on the outer surface layer, selected from the group consisting of UV-cured or electron-beam-cured crosslinked acrylic, vacuum-cured or UV-cured urethane, UV-cured or electron-beam-cured silicon with acrylic, heat cured urethane or plastisol, and combinations thereof.

6. A method for making an article according to claim 1 from a synthetic laminate structure which comprises:
I. disposing a laminating enhancer comprising a polyurethane in a random or uniform pattern between a first surface of an outer layer comprising a substantially transparent PETG copolyester having an inherent viscosity of from 0.5 to 1.2 dL/g as measured at 25°C using 0.50 grams of polymer per 100 ml of a solvent consisting of 60% by weight phenol and 40% by weight tetrachloroethane, wherein the copolyester comprises:
(1) a dicarboxylic acid component comprising repeat units from at least 80 mole % of terephthalic acid or dimethylterephthalate; and
(2) a diol component comprising repeat units from 98 to 1 mole % ethylene glycol and 2 to 99 mole % cyclohexanedimethanol, based on 100 mole % dicarboxylic acid and 100 mole % diol;
and a first surface of a printed or colored polymeric film layer so that a substantially discontinuous layer of the laminating enhancer is sandwiched between the first surface of the outer layer and the first surface of the film layer;
II. disposing a backing layer comprising a PETG copolyester adjacent a second surface of the film layer so that the outer layer and film layer with the laminating enhancer sandwiched therebetween and the backing layer are in superposed relation; and wherein a second laminating enhancer layer is disposed between the backing layer and said second surface of the film layer;
III. applying sufficient heat and pressure to the superposed outer layer, film layer and backing layer to cause the laminating enhancer to flow and spread between the outer layer and film layer into a substantially continuous layer providing a bond between the outer layer and film layer which exhibits a substantial absence of visible air pockets or adhesion discontinuities; and
IV. forming and shaping said article by thermoforming.

7. The method of Claim 6 wherein the laminating enhancer is disposed by spraying.

8. The method of Claim 6 wherein the laminating enhancer is disposed by sputter coating.

9. The method of Claim 6 wherein Step (III) is carried out by hot press bonding followed by cold press bonding wherein hot press bonding is conducted at a temperature of 121°C to 171°C (250°F to 340°F) and a pressure of 482.65 kPa to 758.45 kPa (70 psi to 110 psi) and cold press bonding is conducted at a temperature of 21°C to 171°C (70°F to 340°F) and a pressure of 89.6 kPa to 3447.5 kPa (13 psi to 500 psi).

10. The method of Claim 9 wherein hot press bonding is conducted at a temperature of 132°C to 146°C (270°F to 295°F) and a pressure of 620.55 kPa to 689.5 kPa (90 psi to 100 psi) and cold press bonding is conducted at a temperature of 38°C to 54°C (100°F to 130°F) and a pressure of 689.5 kPa to 2068.5 kPa (100 psi to 300 psi).

## Patentansprüche

1. Gegenstand, gestaltet und geformt durch Wärmeformen einer synthetischen Laminatstruktur, welche umfasst:
(A) eine äußere Schicht mit einer Dicke von 0,13 mm bis 12,7 mm (0,005 bis 0,5 Inch), welche einen im Wesentlichen transparenten PETG-Copolyester mit einer inneren Viskosität von 0,5 bis 1,2 dl/g umfasst, wie bei 25°C unter Verwendung von 0,50 Gramm Polymer pro 100 ml eines Lösungsmittels gemessen, das aus 60 Gew.-% Phenol und 40 Gew.-% Tetrachlorethan besteht, wobei der Copolyester umfasst:
(1) eine Dicarbonsäure-Komponente, die Struktureinheiten aus mindestens 80 Mol-% Terephthalsäure oder Dimethylterephthalat umfasst; und
(2) eine Diol-Komponente, die Struktureinheiten aus 98 bis 1 Mol-% Ethylenglycol und 2 bis 99 Mol-% Cyclohexandimethanol umfasst, bezogen auf 100 Mol-% Dicarbonsäure und 100 Mol-% Diol;
(B) eine bedruckte oder farbige Polymerfolienschicht mit entgegengesetzten Oberflächen, wobei mindestens eine der Oberflächen farbig ist oder ein gedrucktes Bild darauf aufweist und wobei die Druckfarbe, die beim Drucken des Bildes verwendet wurde, eine auf Lösungsmittel basierende Druckfarbe ist;
(C) eine Stützschicht, die einen PETG-Copolyester umfasst und eine Dicke von 0,127 mm bis 24,1 mm aufweist und angrenzend an die Folienschicht angeordnet ist;
(D) eine die Laminierung verstärkende Schicht, die ein Polyurethan umfasst und zwischen der äußeren Schicht und der Folienschicht angeordnet ist, um für eine gute Bindung zwischen den Schichten zu sorgen, die eine wesentliche Abwesenheit von sichtbaren Lufttaschen oder Klebediskontinuitäten zeigt; und
(E) eine zweite die Laminierung verstärkende Schicht, die zwischen der Stützschicht und der bedruckten oder farbigen Folienschicht angeordnet ist.

2. Gegenstand nach Anspruch 1, bei dem der Copolyester in der äußeren Schicht (A) eine innere Viskosität von 0,6 bis 0,9 dl/g aufweist und die Diol-Komponente des Copolyesters Struktureinheiten aus 67 bis 75 Mol-% Ethylenglycol und 33 bis 25 Mol-% 1,4-Cyclohexandimethanol umfasst.

3. Gegenstand nach Anspruch 1, bei dem die bedruckte oder farbige Folienschicht aus einem Polymer hergestellt ist, das ausgewählt ist aus der Gruppe bestehend aus Polyvinylchlorid und einem Copolyester.

4. Gegenstand nach Anspruch 1, bei dem die Dicke der bedruckten oder farbigen Folienschicht 0,025 mm bis 0,254 mm (0,001 bis 0,01 Inch) dick ist.

5. Gegenstand nach Anspruch 1, weiter umfassend einen harten Überzug, der auf der äußeren Oberflächenschicht vorgesehen ist und aus der Gruppe ausgewählt ist, die aus UV-gehärtetem oder Elektronenstrahl-gehärtetem vernetztem Acrylharz, Vakuum-gehärtetem oder UV-gehärtetem Urethan, UV-gehärtetem oder Elektronenstrahl-gehärtetem Silicium mit Acrylharz, wärmegehärtetem Urethan oder Plastisol und deren Kombinationen besteht.

6. Verfahren zur Herstellung eines Gegenstandes nach Anspruch 1 aus einer synthetischen Laminatstruktur, welches umfasst:
I. Anordnen eines Laminierungsverstärkers, der ein Polyurethan umfasst, in einem statistischen oder gleichförmigen Muster zwischen einer ersten Oberfläche einer äußeren Schicht, die einen im Wesentlichen transparenten PETG-Copolyester mit einer inneren Viskosität von 0,5 bis 1,2 dl/g umfasst, wie bei 25°C unter Verwendung von 0,50 Gramm Polymer pro 100 ml eines Lösungsmittels gemessen, das aus 60 Gew.% Phenol und 40 Gew.-% Tetrachlorethan besteht; wobei der Copolyester umfasst:
(1) eine Dicarbonsäure-Komponente, die Struktureinheiten aus mindestens 80 Mol-% Terephthalsäure oder Dimethylterephthalat umfasst; und
(2) eine Diol-Komponente, die Struktureinheiten aus 98 bis 1 Mol-% Ethylenglycol und 2 bis 99 Mol-% Cyclohexandimethanol umfasst, bezogen auf 100 Mol-% Dicarbonsäure und 100 Mol-% Diol; und einer ersten Oberfläche einer bedruckten und farbigen PolymerfolienSchicht, so dass eine im Wesentlichen diskontinuierliche Schicht des Laminierungsverstärkers zwischen der ersten Oberfläche der äußeren Schicht und der ersten Oberfläche der Folienschicht angeordnet ist;
II. Anordnen einer Stützschicht, die einen PETG-Copolyester umfasst, angrenzend an eine zweite Oberfläche der Folienschicht, so dass die äußere Schicht und die Folienschicht mit dem dazwischen angeordneten Laminierungsverstärker und die Stützschicht übereinander gelagert sind; und wobei eine zweite Laminierungsverstärkerschicht zwischen der Stützschicht und der zweiten Oberfläche der Folienschicht angeordnet ist;
III. Anwenden von ausreichend Wärme und Druck auf die übereinandergelagerte äußere Schicht, Folienschicht und Stützschicht, um zu bewirken, dass der Laminierungsverstärker zwischen der äußeren Schicht und der Folienschicht zu einer im Wesentlichen kontinuierlichen Schicht zerfließt und sich ausbreitet, wodurch eine Bindung zwischen der äußeren Schicht und der Folienschicht bereitgestellt wird, die eine wesentliche Abwesenheit von sichtbaren Lufttaschen oder Haftungsdiskontinuitäten zeigt; und
IV. Formen und Gestalten des Gegenstands durch Wärmeformung.

7. Verfahren nach Anspruch 6, bei dem der Laminierungsverstärker durch Sprühen aufgetragen wird.

8. Verfahren nach Anspruch 6, bei dem der Laminierungsverstärker durch Sputterbeschichtung aufgetragen wird.

9. Verfahren nach Anspruch 6, bei dem Schritt (III) durch Heißpressbinden, gefolgt von Kaltpressbinden durchgeführt wird, wobei das Heißpressbinden bei einer Temperatur von 121°C bis 171°C (250°F bis 340°F) und einem Druck von 482,65 kPa bis 758,45 kPa (70 psi bis 110 psi) durchgeführt wird und das Kaltpressbinden bei einer Temperatur von 21°C bis 171°C (70°F bis 340°F) und einem Druck von 89,6 kPa bis 3447,5 kPa (13 psi bis 500 psi) durchgeführt wird.

10. Verfahren nach Anspruch 9, bei dem das Heißpressbinden bei einer Temperatur von 132°C bis 146°C (270°F bis 295°F) und einem Druck von 620,55 kPa bis 689,5 kPa (90 psi bis 100 psi) durchgeführt wird und das Kaltpressbinden bei einer Temperatur von 38°C bis 54°C (100°F bis 130°F) und einem Druck von 689,5 kPa bis 2068,5 kPa (100 psi bis 300 psi) durchgeführt wird.

## Revendications

1. Article façonné et formé par le formage à chaud d'une structure de stratifié synthétique qui comprend :
(A) une couche externe de 0,13 mm à 12,7 mm (0,005 à 0,5 pouce) d'épaisseur, comprenant un copolyester PETG essentiellement transparent ayant une viscosité intrinsèque de 0,5 à 1,2 dl/g comme mesurée à 25°C en utilisant 0,50 gramme de polymère pour 100 ml d'un solvant consistant en 60 % en poids de phénol et 40 % en poids de tétrachloroéthane, dans laquelle le copolyester comprend :
(1) un composant acide dicarboxylique comprenant des motifs répétitifs d'au moins 80 % en moles d'acide téréphtalique ou de téréphtalate de diméthyle ; et
(2) un composant diol comprenant des motifs répétitifs de 98 à 1 % en moles d'éthylène glycol et de 2 à 99 % en moles de cyclohexanediméthanol, pour 100 % en moles d'acide dicarboxylique et 100 % en moles de diol ;
(B) une couche pelliculaire polymère, imprimée ou colorée, ayant des surfaces opposées, dans laquelle au moins l'une des surfaces est colorée ou comporte une image imprimée en sa surface, et dans laquelle l'encre utilisée lors de l'impression de l'image est une encre à base de solvant ;
(C) une couche dorsale comprenant un copolyester PETG et ayant une épaisseur de 0,127 mm à 24,1 mm, disposée adjacente à la couche pelliculaire ; et
(D) une couche d'agent renforçant la stratification, comprenant un polyuréthane, disposée entre la couche externe et la couche pelliculaire, fournissant un lien entre les couches qui révèle une absence notable de poches d'air visibles ou de discontinuités d'adhérence ; et
(E) une seconde couche d'agent renforçant la stratification, disposée entre la couche dorsale et la couche pelliculaire imprimée ou colorée.

2. Article selon la revendication 1, dans lequel le copolyester de la couche externe (A) présente une viscosité intrinsèque de 0,6 à 0,9 dl/g et le composant diol du copolyester comprend des motifs répétitifs de 67 à 75 % en moles d'éthylène glycol et de 33 à 25 % en moles de 1,4-cyclohexanediméthanol.

3. Article selon la revendication 1, dans lequel la couche pelliculaire imprimée ou colorée est préparée à partir d'un polymère choisi dans le groupe constitué par le polychlorure de vinyle et un copolyester.

4. Article selon la revendication 1, dans lequel l'épaisseur de la couche pelliculaire imprimée ou colorée est de 0,025 mm à 0,254 mm (0,001 à 0,01 pouce).

5. Article selon la revendication 1, comprenant en outre une couche dure disposée sur la couche superficielle externe, choisie dans le groupe constitué par l'acrylique réticulé durci aux UV ou durci par un faisceau d'électrons, l'uréthane durci sous vide ou durci aux UV, le silicium avec acrylique durci aux UV ou durci par un faisceau d'électrons, le plastisol ou l'uréthane durci à la chaleur, et les combinaisons de ceux-ci.

6. Procédé de fabrication d'un article selon la revendication 1 à partir d'une structure de stratifié synthétique, qui comprend les étapes consistant à :
I. disposer un agent renforçant la stratification comprenant un polyuréthane en un motif aléatoire ou uniforme entre une première surface d'une couche externe comprenant un copolyester PETG essentiellement transparent ayant une viscosité intrinsèque de 0,5 à 1,2 dl/g comme mesurée à 25°C en utilisant 0,50 gramme de polymère pour 100 ml d'un solvant consistant en 60 % en poids de phénol et 40 % en poids de tétrachloroéthane, dans laquelle le copolyester comprend :
(1) un composant acide dicarboxylique comprenant des motifs répétitifs d'au moins 80 % en moles d'acide téréphtalique ou de téréphtalate de diméthyle ; et
(2) un composant diol comprenant des motifs répétitifs de 98 à 1 % en moles d'éthylène glycol et de 2 à 99 % en moles de cyclohexanediméthanol, pour 100 % en moles d'acide dicarboxylique et 100 % en moles de diol ; et une première surface d'une couche pelliculaire imprimée ou colorée, de façon à ce qu'une couche essentiellement discontinue de l'agent renforçant la stratification soit prise en sandwich entre la première surface de la couche externe et la première surface de la couche pelliculaire ;
II. disposer une couche dorsale, comprenant un copolyester PETG, adjacente à une seconde surface de la couche pelliculaire de façon à ce que la couche externe et la couche pelliculaire, avec l'agent renforçant la stratification pris en sandwich entre elles, et la couche dorsale soient dans une relation superposée ; et dans lequel une seconde couche d'agent renforçant la stratification est disposée entre la couche dorsale et ladite seconde surface de la couche pelliculaire ;
III. appliquer suffisamment de chaleur et de pression à la couche externe, à la couche pelliculaire et à la couche dorsale superposées pour faire circuler et étaler l'agent renforçant la stratification entre la couche externe et la couche pelliculaire afin de le mettre sous la forme d'une couche essentiellement continue fournissant un lien entre la couche externe et la couche pelliculaire qui révèle une absence notable de poches d'air visibles ou de discontinuités d'adhérence ; et
IV. former et façonner ledit article par formage à chaud.

7. Procédé selon la revendication 6, dans lequel l'agent renforçant la stratification est disposé par projection.

8. Procédé selon la revendication 6, dans lequel l'agent renforçant la stratification est disposé par pulvérisation cathodique.

9. Procédé selon la revendication 6, dans lequel l'étape (III) est effectuée par un collage à la presse à chaud suivi d'un collage à la presse à froid, le collage à la presse à chaud étant mené à une température de 121°C à 171°C (250°F à 340°F) et à une pression de 482,65 kPa à 758,45 kPa (70 psi (livres par pouce carré) à 110 psi) et le collage à la presse à froid étant mené à une température de 21 °C à 171°C (70°F à 340°F) et à une pression de 89,6 kPa à 3447,5 kPa (13 psi (livres par pouce carré) à 500 psi).

10. Procédé selon la revendication 9, dans lequel le collage à la presse à chaud est mené à une température de 132°C à 146°C (270°F à 295°F) et à une pression de 620,55 kPa à 689,5 kPa (90 psi (livres par pouce carré) à 100 psi) et le collage à la presse à froid est mené à une température de 38°C à 54°C (100°F à 130°F) et à une pression de 689,5 kPa à 2068,5 kPa (100 psi (livres par pouce carré) à 300 psi).
